# EUROPEAN PATENT APPLICATION

(11) **EP 2 595 280 A1**
(43) Date of publication of application: **22.05.2013**
(21) Application number: 11806722.2
(22) Date of filing: 11.07.2011
(51) Int. Cl.: H02J 13/00, H01M 10/44, H01M 10/48, H02J 3/00, H02J 3/32, H02J 7/00, H02J 7/35, H01M 8/00

(54) **ENERGY MANAGEMENT SYSTEM FOR HOUSES**

(30) Priority: 15.07.2010 JP 2010160175
(71) Applicant: TOYOTA JIDOSHA KABUSHIKI KAISHA, Toyota-shi, Aichi-ken, 471-8571 (JP); Misawa Homes Co., Ltd., Tokyo 163-0833 (JP)
(72) Inventor: OZAKI, Daijiro, Tokyo 168-0072 (JP)
(74) Representative: Goddar, Heinz J.
(86) International application number: PCT/JP2011/065753
(87) International publication number: WO 2012/008392

(57) **Abstract**

The present invention provides a household energy management system, which comprises a common controller 8 connected with a controller 7 for controlling grid power 1, a controller 2a for controlling an in-house electric power generation device 2, a controller 3c for controlling an electric storage device 3, a controller 4c for controlling an electric storage device for traveling object 4, controllers 5d, 5e, and 5f for controlling household electric loads 5, and manage the energy consumption and supply by controlling the respective controllers 7, 2a, 3c, 4c, 5d, 5e, and 5f, so that the overall energy consumption and supply in the house can be managed centrally, and the respective machines can be controlled with a single controller (common controller) 8 centrally.

## Description

### Field of the Invention

The present invention relates to a household energy management system.

### Background of the Invention

The system described in patent document 1 is known as an energy management system for residential houses/buildings and small shops.

The management system comprises a plurality of air conditioners for indoor air conditioning, a plurality of detectors or sensors, a plurality of controllers for setting and controlling the plurality of air conditioners, a plurality of controllers for controlling a plurality of household electric appliances or lighting fixtures, and a plurality of monitor terminals for providing input to the system and displaying system state.

### Earlier technical literatures

### Patent documents:

Patent document 1: Patent Publication No. JP2006-331372

### Summary of the Invention

Existing management systems can't manage overall energy transfer in houses centrally.

In recent years, electric power operated vehicles such as plug-in hybrid vehicles (PHVs) and electric vehicles (EVs), etc. were developed, and some products have been introduced into the market. However, the overall energy state in the house, including such electric power operated vehicles (traveling objects), can't be managed centrally.

In addition, display and operation terminals for the respective machines are distributed in the house, and the user must perform operations related with operation and setting of the respective machines on the respective display and operation terminals, often leading to misoperations and misjudgement.

In view of above problems, the object of the present invention is to provide a household energy management system, which can manage the overall energy state in a house centrally and can control the respective machines with single controller.

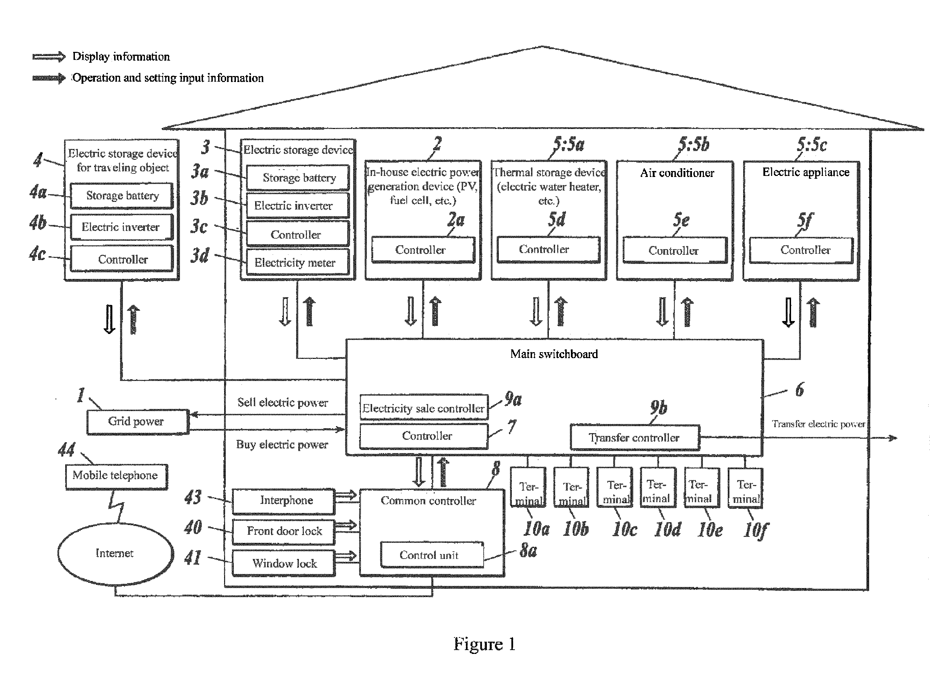

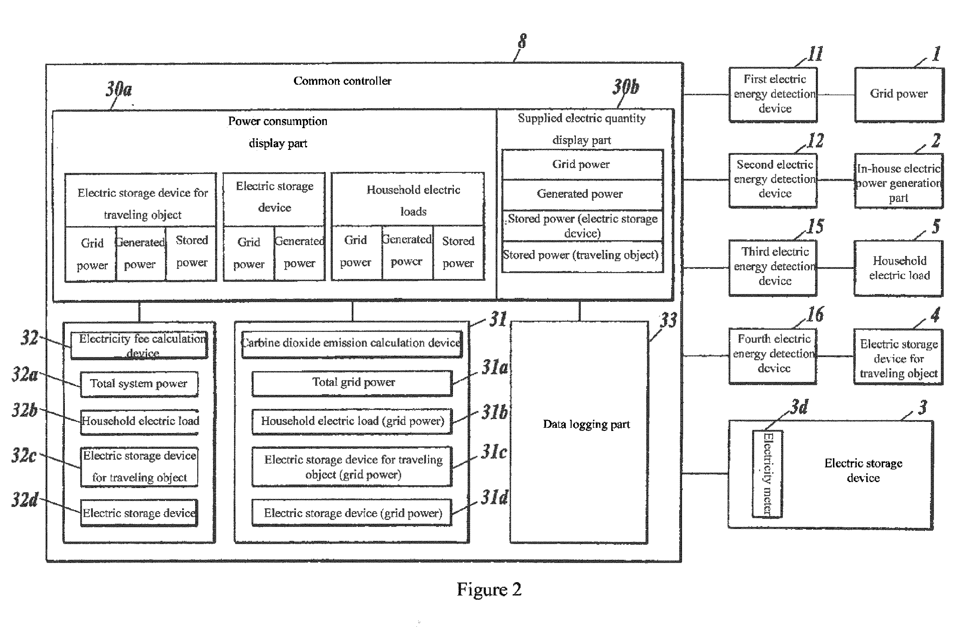

To solve above problems, as shown in Figure 1 and Figure 2, the invention described in claim 1 is a household energy management system, which manages the energy consumption and supply centrally by incorporating external grid power 1, in-house electric power generation device 2 installed in the house, electric storage device 3 installed in the house, electric storage device for traveling object 4 installed in an electric power operated traveling object, and household electric loads 5 in the house, wherein, the household energy management system comprises a common controller 8,
the common controller 8 is connected with a controller 7 for controlling the grid power 1, a controller 2a for controlling the in-house electric power generation device 2, a controller 3c for controlling the electric storage device 3, a controller 4c for controlling the electric storage device for traveling object 4, and controllers 5d, 5e, and 5f for controlling the household electric loads 5;
the common controller 8 manage the energy consumption and supply via controlling the respective controllers 7, 2a, 3c, 4c, 5d, 5e, and 5f.

In the invention described in claim 1, since the common controller 8 manages the energy consumption and supply by controlling the respective controllers for grid power 1, in-house electric power generation device 2, electric storage device 3, electric storage device for traveling object 4, and household electric loads 5, the overall energy consumption and supply in the house can be managed centrally, and the respective machines can be controlled by a single controller (common controller) 8.

In the invention described in claim 2, in the household energy management system described in claim 1, characterized in that, the common controller 8 controls an electricity sale controller 9a for controlling the sale of the surplus power generated by the in-house electric power generation device 2 and/or a transfer controller 9b for transferring electric power.

In the invention described in claim 2, the common controller 8 manages the overall energy consumption and supply in the house centrally, including electricity sale and electric power transfer, by controlling the electricity sale controller 9a and/or the transfer controller 9b for electric power transfer.

In the invention described in claim 3, in the household energy management system described in claim 1 or 2, characterized in that, the common controller 8 can display: state of overall energy balance in the house resulting from the grid power 1, in-house electric power generation device 2, electric storage device 3, electric storage device for traveling object 4, and household electric loads 5, state of energy supply resulting from the in-house electric power generation device 2, state of energy balance of the electric storage device 3 and electric storage device for traveling object 4, and state of energy consumption resulting from the household electric loads 5.

In the invention described in claim 3, the common controller 8 displays a state of overall energy balance in the house, state of energy supply resulting from the in-house electric power generation device 2, state of energy balance of the electric storage device 3 and electric storage device for traveling object 4, and state of energy consumption resulting from the household electric loads 5, so that the user can acknowledge the states easily.

In the invention described in claim 4, in the household energy management system described in any one of claims 1-3, characterized in that, the respective controllers are connected, via communication devices that are preset in plant, to the common controller 8, on building units that constitute at least a part of the house.

In the invention described in claim 4, the respective controllers are connected to the common controller 8 easily via communication devices arranged in building units in the house; therefore, the system can be built up easily.

In the invention described in claim 5, in the household energy management system described in any one of claims 1-4, characterized in that,
terminal controllers 10a-10f are connected to at least one of the plurality of controllers that are connected to the in-house electric power generation device 2, the electric storage device 3, the electric storage device for traveling object 4, and the household electric loads 5 respectively and can control the at least one of the plurality of controllers;
the common controller 8 is arranged in a way that can enable the control over the controllers by the terminal controllers 10a-10f have precedence over the control over the controllers by the common controller 8.

That is to say, the system has a common controller 8 and the respective terminal controllers 10a-10f for the respective machines (in-house electric power generation device 2, electric storage device 3, electric storage device for traveling object 4, and household electric load 5, etc.). In addition, whether the terminal controllers 10a-10f or the common controller 8 takes precedence in the control can be selected by means of a selector switch mounted on the common controller, for example.

In the invention described in claim 5, the common controller 8 enables the terminal controllers 10a-10f to take precedence over it for control over the controller; therefore, the controllers connected to the in-house electric power generation device 2, electric storage device 3, electric storage device for traveling object 4, and household electric loads 5 can be controlled by the terminal controllers 10a-10f as required.

In the invention described in claim 6, in the household energy management system described in any one of claims 1-5, characterized in that, the common controller 8 can display a state of connection between the grid power 1 and the in-house electric power generation device 2 and electric storage device 3, the electric storage device for traveling object 4 and the household electric loads 5, and control the energy consumption and supply thereof.

The invention described in claim 6 can display a state of connection between the energy supply side (the grid power 1 and the in-house electric power generation device 2) and the energy storage or consumption side (the electric storage device 3, the electric storage device for traveling object 4, and the household electric loads 5), and can control the energy consumption and supply. In addition, the energy consumption and cost can be displayed on the common controller 8.

In the invention described in claim 7, in the household energy management system described in claim 6, characterized in that,
the common controller 8 displays a warning message and the time required to reach to full energy state if the common controller 8 judges the energy state of the electric storage device 3 and electric storage device for traveling object 4 is inadequate, when the common controller 8 detects the connections to the electric storage device 3 and the electric storage device for traveling object 4 is to be released.

In addition, no matter whether the charged capacity (energy state) of the electric storage device 3 and electric storage device for traveling object 4 is full or not, preferably the common controller 8 always displays the energy level and the time required for charging.

In the invention described in claim 7, the common controller 8 displays a warning message and the time required to reach to full energy state if the common controller 8 judges the energy state of the electric storage device 3 and electric storage device for traveling object 4 is inadequate, so that the user can decide whether to supply power to the electric storage device 3 and electric storage device for traveling object 4 till they are charged to full energy state.

In the invention described in claim 8, in the household energy management system described in claim 7, characterized in that,
a terminal controller 10c is connected to the controller 4c that controls the electric storage device for traveling object 4;
the terminal controller 10c displays the warning message and time.

In the invention described in claim 8, the terminal controller 10c displays a warning message and the time required to reach to full energy state when the energy state of the electric storage device for traveling object 4 is judged as inadequate, so that the user can decide whether supply power to the electric storage device for traveling object 4 till it is charged to full energy state by acknowledging on the terminal controller 10c.

In the invention described in claim 9, in the household energy management system described in any one of claims 1-8, characterized in that,

The common controller 8 has multiple automatic operation modes, and can select an expected automatic operation mode.

In the multiple automatic operation modes, when an environmental protection mode is selected, the common controller 8 controls the respective controllers to maintain self-sufficiency of energy in the house in first priority, and store surplus energy into the electric storage device 3 and electric storage device for traveling object 4 on condition that the surplus energy is generated.

In the invention described in claim 9, the common controller 8 maintains self-sufficiency of energy in the house in first priority; therefore, the electric power generated by the in-house electric power generation device 2 is consumed by the household electric loads 5, and surplus energy is stored in the electric storage device 3 and electric storage device for traveling object 4 on condition that the surplus energy is generated; thus, it is possible to optimize the energy utilization.

The system provided in the present invention comprises a common controller, which is connected with a controller for controlling grid power, a controller for controlling an in-house electric power generation device, a controller for controlling electric storage device, a controller for controlling an electric storage device for traveling object, and controllers for controlling household electric loads; thus, the common controller manages the overall energy consumption and supply in the house centrally by controlling the respective controllers, and the respective machines can be controlled by a single controller (common controller) centrally.

### Brief Description of the Drawings

Figure 1 is a schematic structural block diagram of an example of the household energy management system disclosed in the present invention.
Figure 2 is a schematic structural block diagram of the system.
Figure 3 is a process flow chart that describes the environmental protection mode.
Figure 4 is a process flow chart that describes the method of electric storage in low electricity price periods in economic mode.
Figure 5 is a process flow chart that describes the economic mode.
Figure 6 is a process flow chart that describes the operation mode against emergency periods.

### Brief Description of the Symbols

- 1.: Grid power
- 2.: In-house electric power generation device
- 2a.: Controller
- 3.: Electric storage device
- 3c.: Controller
- 4.: Electric storage device for traveling object
- 4c.: Controller
- 5.: Household electric load
- 5d, 5e, 5f.: Controller
- 6.: Main switchboard
- 7.: Controller
- 8.: Common controller
- 9a.: Electricity sale controller
- 9b.: Transfer controller
- 10a-10f.: Terminal controller

### Detailed Description of the Embodiments

Hereunder the household energy management system disclosed in the present invention will be described in an embodiment, with reference to the accompanying drawings.

Figure 1 is a schematic structural diagram of the household energy management system disclosed in the present invention. As shown in Figure 1, the household energy management system incorporates external grid power 1, in-house electric power generation device 2 installed in the house, electric storage device 3 installed in the house, electric storage device for traveling object 4 mounted in an electric power operated traveling object, and household electric loads 5 in the house, to manage the energy consumption and supply.

The grid power 1 is AC power supplied from an electric utility company to a main switchboard 6 mounted in the house.

The main switchboard 6 has a controller 7 for supplying grid power 1 to the electric storage device 3, electric storage device for traveling object 4, and household electric loads 5, and the controller 7 is connected to a common controller 8 via the main switchboard 6. In addition, the common controller 8 controls the controller 7 to supply grid power 1 to the expected devices among electric storage device 3, electric storage device for traveling object 4, and household electric loads 5.

The common controller 8 has a control unit 8a that controls the controller 7, in-house electric power generation device 2, electric storage device 3, electric storage device for traveling object 4, and household electric loads 5 respectively.

In addition, the main switchboard 6 has an electricity sale controller 9a for selling the surplus energy (electric power) generated by the in-house electric power generation device 2 to the system side and a transfer controller 9b for transferring electric power to other areas, etc.; the electricity sale controller 9a and transfer controller 9b are connected to the common controller 8. In addition, the electricity sale controller 9a can be controlled by the control unit 8a of the common controller 8 to sell the surplus energy to the system side, and the transfer controller 9b can be controlled to supply the surplus energy to other houses and areas.

The in-house electric power generation device 2 can be a solar electric power generation device or fuel cell that generates electric energy, for example, and has a controller 2a that controls it; the controller 2a is connected to the common controller 8 via the main switchboard 6. In addition, the controller 2a is controlled by the control unit 8a of the common controller 8 to control the in-house electric power generation device 2.

The common controller 8 displays display and operation screens for the in-house electric power generation device 2, electric storage device 3, electric storage device for traveling object 4, and household electric loads 5, etc.; and operating and setting information can be inputted on the operation screen for the in-house electric power generation device 2. For example, the start time, stop time, and operation time, etc. of the in-house electric power generation device 2 can be set on the operation screen.

The electric storage device 3 is a device that can store the surplus electric power (energy) generated by the in-house electric power generation device 2 and the grid power during nocturnal period when the electricity price is lower (low electricity price period) and discharges as required, and it comprises a storage battery 3a composed of Li-ion cells, etc., an electric inverter 3b, a controller 3c, and an electricity meter 3d.

The electric inverter 3b converts grid power 1 into DC electric power, and is controlled by the controller 3c. Moreover, the controller 3c stores the grid power 1 converted into DC electric power by the electric inverter 3b into the storage battery 3a, or stores the DC electric power generated by the in-house electric power generation device 2 into the storage battery 3a, and can discharge the electric power stored in the storage battery 3a as required and thereby controls the charge/discharge of the storage battery 3a.

Moreover, the discharged electric power (energy) is supplied to the electric storage device for traveling object 4 and household electric load 5. The controller 3c is connected to the common controller 8, and the control unit 8a of the common controller 8 controls the electric storage device 3 by controlling the controller 3c.

For example, on the operation screen for electric storage device 3 of the common controller 8, operation and setting information can be inputted, so as to instruct the controller 3c to charge/discharge. When the controller 3c is instructed to charge/discharge, the operation mode, start time of charge/discharge, end time of charge/discharge, and priority of electric power during charging, etc., can be set on the operation screen of the common controller 8. In addition, the priority of electric power during charging refers to the precedence in which the grid power 1 or the electric power generated by the in-house electric power generation device 2 is used as the electric power for charging first.

In addition, the controller 3c has a function of detecting the stored capacity (charged capacity) in the storage battery 3 a.

The electric storage device for traveling object 4 is an electric storage device of an electric power operated traveling object such as plug-in hybrid vehicle (PHV) and electric vehicle (EV), etc., and it comprises a storage battery 4a, an electric inverter 4b, and a controller 4c. The electric inverter 4b converts AC grid power into DC electric power, and is controlled by the controller 4c. Moreover, the controller 4c stores the grid power converted into DC electric power by the electric inverter 4b into the storage battery 4a, or stores the DC electric power generated by the in-house electric power generation device 2 into the storage battery 4a, and can discharge the electric power stored in the storage battery 4a as required and thereby controls the charge/discharge of the storage battery 4a.

The electric storage device for traveling object 4 is connected with a charging cable in a removable manner, and the charging cable is connected to the main switchboard 6.

In addition, the controller 4c is connected to the common controller 8 via the main switchboard 6, and the control unit 8a of the common controller 8 controls the electric storage device for traveling object 4 by controlling the controller 4c.

For example, on the operation screen for electric storage device for traveling object 4 of the common controller 8, operation and setting information can be inputted, so as to instruct the controller 4c to charge/discharge. When the controller 4c is instructed to charge/discharge, the operation mode, start time of charge/discharge, end time of charge/discharge, and priority of electric power during charging, etc., can be set on the operation screen of the common controller 8.

In addition, the priority of electric power during charging refers to the precedence in which the grid power 1 or the electric power generated by the in-house electric power generation device 2 is used as the electric power for charging first.

In addition, the controller 4c has a function of detecting the stored capacity (charged capacity) in the storage battery 4a.

The household electric loads 5 can be an electric water heater that utilize thermal pump technique and air thermal energy to boil up water (i.e., thermal storage device 5a), an air conditioner 5b, and household electric appliances 5c such as refrigerator, washing machine, air conditioner, TV set, and electric lamp, etc.

These household electric loads 5 (5a, 5b, 5c) have controllers 5d, 5e, and 5f that control them respectively, and these controllers 5d, 5e, and 5f are connected to the common controller 8 via the main switchboard 6. In addition, the control unit 8a of the common controller 8 controls the household electric loads 5 (5a, 5b, and 5c) by controlling the controllers 5d, 5e, and 5f.

For example, on the operation screen for household electric loads 5 of the common controller 8, operation and setting information can be inputted, so that the start time, stop time, and operation time of the household electric loads 5 (5a, 5b, and 5c), etc. can be set.

Furthermore, the controllers 2a, 3c, 4c, 5d, 5e, and 5f for device such as in-house electric power generation device 2, electric storage device 3, electric storage device for traveling object 4, and household electric loads 5, etc. are connected with terminal controllers 10a, 10b, 10c, 10d, 10e, and 10f that control these controllers via the main switchboard 6. These terminal controllers 10a, 10b, 10c, 10d, 10e, and 10f are mounted at appropriate places in the house. Moreover, the common controller 8 can enable the terminal controllers 10a, 10b, 10c, 10d, 10e, and 10f to take precedence in the control over the controllers 2a, 3c, 4c, 5d, 5e, and 5f over the control by the control unit 8a of the common controller 8.

Display and operation screens are displayed on the terminal controllers 10a, 10b, 10c, 10d, 10e, and 10f respectively, and operation and setting information can be inputted on the respective operation screens.

Therefore, the controllers 2a, 3c, 4c, 5d, 5e, and 5f connected to the devices 2, 3, 4, and 5 can be controlled by the terminal controllers 10a, 10b, 10c, 10d, 10c, and 10f as required.

The respective controllers 2a, 3c, 4c, 5d, 5e, and 5f are connected, via communication devices that are preset in plant, to the common controller 8, on building units that constitute at least a part of the house.

The building units have a cuboid skeleton respectively; a plurality of building units can be assembled on site to construct a house.

A ceiling is arranged above the building units, a floor is arranged below the building units, and walls built up with outer wall and inner wall materials are arranged around the building units. In addition, communication devices that connect the respective controllers 2a, 3c, 4c, 5d, 5e, and 5f to the common controller 8 are pre-mounted on the ceiling, floor, and walls in plant. The communication devices comprise wired devices, wireless devices, or a combination of wired devices and wireless devices.

In the case of wired devices, a main switchboard is pre-mounted on a specified building unit, and conductive wires that connect the respective controllers 2a, 3c, 4c, 5d, 5e, and 5f to the main switchboard 6 and conductive wires that connect the main switchboard 6 to the common controller 8 are pre-mounted on the ceiling, floor, and walls around appropriate building units. In addition, in the case of wireless devices, wireless communication devices are mounted on the main switchboard 6 and the common controller 8 respectively, and the main switchboard 6 is connected to the common controller 8 via the wireless communication devices.

In that way, communication device for connecting the respective controllers 2a, 3c, 4c, 5d, 5e, and 5f to the common controller 8 are pre-mounted on the ceiling, floor, and walls around the building units in plant; thus, in a house built up with building units pre-mounted with communication devices, the respective controllers 2a, 3c, 4c, 5d, 5e, and 5f can be connected to the common controller 8 easily via the communication devices; therefore, the system can be built up easily.

Moreover, the common controller 8 can display a state of overall energy balance in the house resulting from the grid power 1, in-house electric power generation device 2, electric storage device 3, electric storage device for traveling object 4, and household electric loads 5, state of energy supply resulting from the in-house electric power generation device 2, state of energy balance of the electric storage device 3 and electric storage device for traveling object 4, and state of energy consumption resulting from the household electric loads 5.

Specifically, first, as shown in Figure 2, a first electric energy detection device 11, a second electric energy detection device 12, a third electric energy detection device 15, and a fourth electric energy detection device 16 are connected to the grid power 1, in-house electric power generation device 2, household electric loads 5, and electric storage device for traveling object 4, respectively. These electric energy detection devices are mounted on the main switchboard 6. Moreover, the electric storage device 3 has an electricity meter 3d.

The common controller 8 has a power consumption display part 30a and a supplied electric quantity display part 30b.

The power consumption display part 30a displays the power consumption of the household electric loads 5 on the basis of grid power, generated power, and stored power respectively, according to the power consumption detected by the third electric energy detection device 15. Moreover, the power consumption display part 30a displays the power consumption resulting from charging of the electric storage device for traveling object 4 on the basis of grid power, generated power, and stored power respectively, according to the power consumption detected by the fourth electric energy detection device 16.

In addition, the power consumption display part 30a displays the power consumption resulting from charging of the electric storage device 3 on the basis of grid power and generated power respectively, according to the power consumption detected by the electricity meter 3d.

The supplied electric quantity display part 30b displays the supplied electric quantity of grid power 1 according to the electric quantity detected by the first electric energy detection device 11.

In addition, the supplied electric quantity display part 30b displays the supplied electric quantity of generated power according to the electric quantity detected by the second electric energy detection device 12.

The supplied electric quantity display part 30b displays the supplied electric quantity of stored power in the electric storage device 3 and electric storage device for traveling object 4 respectively, according to the electric quantity discharged from the electric storage device 3 detected by the built-in electricity meter 3d in the electric storage device 3 and the electric quantity discharged from the electric storage device for traveling object 4 detected by the fourth electric energy detection device 16.

Moreover, the power consumption and supplied electric quantity are displayed on the power consumption display part 30a and supplied electric quantity display part 30b on daily, monthly, and annual basis. The power consumption and supplied electric quantity are displayed in figures and diagrams.

that way, the electric quantity supplied from the grid power 1, in-house electric power generation device 2, electric storage device 3, and electric storage device for traveling object 4 and the power consumption of the electric storage device 3, electric storage device for traveling object 4, and household electric loads 5 are displayed. That is to say, a state of overall energy balance in the house is displayed on the basis of the grid power 1, in-house electric power generation device 2, electric storage device 3, electric storage device for traveling object 4, and household electric load 5.

In addition, a state of energy (generated power) supply from the in-house electric power generation device 2, state of energy balance of the electric storage device 3 and electric storage device for traveling object 4, and state of energy consumption of the household electric loads 5 are displayed.

The common controller 8 has a data logging part 33, and the data of power consumption and supplied electric quantity is logged in the data logging part 33.

Thus, in the common controller 8, the user can set the target value of power consumption and display the ratio of actual power consumption to target value on daily, monthly, and annual basis. In addition, the target value is the maximum value of power consumption, and is set to prevent exceeding that maximum value.

The common controller 8 has a carbon dioxide emission calculation device 31. The carbon dioxide emission calculation device 31 calculates the emission amount of carbon dioxide from generation of electric quantity equivalent to the power consumption of grid power detected by the first electric energy detection device 11, and the calculated emission amount of carbon dioxide is displayed on a display part 31a.

In addition, the carbon dioxide emission calculation device 31 calculates the emission amount of carbon dioxide from generation of electric quantity equivalent to the electric quantity of grid power consumed by the household electric loads 5 detected by the third electric energy detection device 15, and the calculated emission amount of carbon dioxide is displayed on a display part 31b.

Moreover, the carbon dioxide emission calculation devices 31 calculates the emission amount of carbon dioxide generation of electric quantity equivalent to the power consumption of grid power resulting from charging of the traveling object 4 detected by the fourth electric energy detection device 16, and the calculated emission amount of carbon dioxide is displayed on a display part 31c.

In addition, the carbon dioxide emission calculation device 31 calculates the emission amount of carbon dioxide from generation of electric quantity equivalent to the power consumption of grid power resulting from charging of the electric storage device 3 detected by the electricity meter 3d, and the calculated emission amount of carbon dioxide is displayed on a display part 31d.

Moreover, the emission amount of carbon dioxide is displayed on the display parts 31a-31d on daily, monthly, and annual basis. The emission amount of carbon dioxide is displayed in figures and diagrams.

Moreover, in the carbon dioxide emission calculation device 31, the user can set a target value of emission amount of carbon dioxide, and the ratios of actual emission amount of carbon dioxide to target value is displayed on the display parts 31a, 31 b, 31 c, and 31d on daily, monthly, and annual basis. In addition, the target value is the maximum value of emission amount of carbon dioxide, and is set to prevent exceeding that maximum value.

In addition, the carbon dioxide emission calculation device 31 can calculate the accumulative total emission amount of carbon dioxide from generation of electric quantity equivalent to the total power consumption of grid power, accumulative total emission amount of carbon dioxide from generation of electric quantity equivalent to the power consumption of grid power resulting from the household electric loads 5, accumulative total emission amount of carbon dioxide from generation of electric quantity equivalent to the power consumption of grid power resulting from charging of the electric storage device for traveling object 4, accumulative total emission amount of carbon dioxide from generation of electric quantity equivalent to the power consumption of grid power resulting from charging of the electric storage device 3 respectively, and the calculated accumulative total emission amounts of carbon dioxide are displayed on the display parts 3 1 a, 31 b, 31 c, and 31 d respectively.

Moreover, the carbon dioxide emission calculation device 31 subtracts the emission amount of carbon dioxide from generation of electric quantity equivalent to the power consumption of grid power resulting from charging of the electric storage device for traveling object 4 from the emission amount of carbon dioxide produced by a gasoline vehicle that has the same power as the electric storage device for traveling object 4. In addition, the calculated value is displayed on a display part, such as the display part 31c.

The common controller 8 has an electricity fee calculation device 32. The electricity fee calculation device 32 calculates the electricity fee equivalent to the total power consumption of grid power according to the power consumption of grid power detected by the first electric energy detection device 11, and displays the calculated electricity fee on a display part 32a. Moreover, the electricity fee calculation device 32 calculates the electricity fee equivalent to the electric quantity of grid power consumed by the household electric loads 5 detected by the third electric energy detection device 15, and displays the calculated electricity fee on a display part 32b.

In addition, the electricity fee calculation device 32 calculates the electricity fee equivalent to the power consumption of grid power resulting from charging of the traveling object 4 detected by the fourth electric energy detection device 16, and displays the calculated electricity fee on a display part 32c.

Moreover, the electricity fee calculation device 32 calculates the electricity fee equivalent to the power consumption of grid power resulting from charging of the electric storage device 4 detected by the electricity meter 3d, and displays the calculated electricity fee on the display part 32d.

In addition, the electricity fee calculation device 32 calculates the electricity fees equivalent to the sold electric quantity and transferred electric quantity detected by the electricity meters built in the electricity sale controller 9a and transfer controller 9b, and subtracts the electricity fees equivalent to the sold electric quantity and transferred electric quantity from the electricity fee equivalent to the total power consumption of grid power to obtain the resultant electricity fee, when the surplus electric power generated by the in-house electric power generation device 2 is sold and transferred, and displays the calculated electricity fee on the display part 32a. Moreover, the electricity fees are displayed on the corresponding display part 32a, 32b, 32c, and 32d on daily, monthly, and annual basis. The electricity fees are displayed in figures and diagrams.

In addition, in the electricity fee calculation device 32, the user can set a target value of electricity fee, and the ratios of actual electricity fee to target value are displayed on the respective display part 32a, 32b, 32c, and 32d on daily, monthly, and annual basis. In addition, the target value is the maximum value of electricity fee, and is set to prevent exceeding that maximum value.

Moreover, the common controller 8 has a suggestion display function for the ratio of actual value/target value of power consumption, ratio of actual value/target value of emission amount of carbon dioxide, and ratio of actual value/target value of electricity fee. For example, the suggestion display function will prompt the user for energy conservation by means of voice prompt or indicator flashing, etc., once the ratio of actual value to target value reaches or exceeds 90%.

Moreover, the common controller 8 has a function for suggesting the priority setting for charging of the electrical storage device 3, charging of the electric storage device for traveling object 4, and operation of the thermal storage device 5a, etc., and thereby the electric power supply that produces the least emission amount of carbon dioxide can be utilized. The suggestion is provided to the user by means of figures and diagrams on the display screen or voice prompt, etc.. In addition, the user can set the priority in advance on a selection screen of the common controller 8.

In addition, the common controller 8 can display a state of connection between the grid power 1 and in-house electric power generation device 2 and the electric storage device 3, electric storage device for traveling object 4, and household electric load 5, and can control the energy consumption and supply thereof.

Specifically, the common controller 8 controls the controllers 7 and 2a to lead electric power (energy) from the grid power 1 and in-house electric power generation device 2, and controls the controller 3c to store the electric power into the electric storage device 3; at the same time, the electric quantity is detected by the electricity meter 3d; thus, a state of connection between the grid power 1 or in-house electric power generation device 2 and the electric storage device 3 is obtained. Thereby, a state of connection between the grid power 1 or in-house electric power generation device 2 and the electric storage device 3 can be displayed on the display screen of the common controller 8. For example, the display can be implemented by turning on a connection status indicator when the connection is established and turning off the connection status indicator when the connection is released, or implemented in another way.

The common controller 8 controls the controllers 7 and 2a to lead electric power (energy) from the grid power 1 or in-house electric power generation device 2, and controls the controller 4c to store the electric power into the electric storage device for traveling object 4; at the same time, the electric quantity is detected by the fourth electric energy detection device 16; therefore, a state of connection between the grid power 1 or in-house electric power generation device 2 and the electric storage device for traveling object 4 is obtained. Thereby, a state of connection between the grid power 1 or in-house electric power generation device 2 and the electric storage device for traveling object 4 can be displayed on the display screen of the common controller 8.

The common controller 8 controls the controllers 7 and 2a to lead electric power (energy) from the grid power 1 or in-house electric power generation device 2, and controls the cantrollers 5d, 5e, and 5f to supply electric power to the household electric loads 5; at the same time, the electric quantity is detected by the third electric energy detection device 15; thus, a state of connection between the grid power 1 or in-house electric power generation device 2 and the household electric loads 5 is obtained. Thereby, a state of connection between the grid power 1 or in-house electric power generation device 2 and the household electric loads 5 can be displayed on the display screen of the common controller 8.

Moreover, when the common controller 8 detects the connection to the electric storage device 3 and the electric storage device for traveling object 4 is to be released and judges the energy state (charged capacity) of the electric storage device 3 and electric storage device for traveling object 4 is inadequate, it displays a warning message and the time required to reach to full energy state.

Specifically, first, a connection button for connecting the grid power 1 or in-house electric power generation device 2 to the electric storage device 3 and electric storage device for traveling object 4 and a release button for releasing the connection are arranged on the operation screen of the common controller 8.

Moreover, if the release button is pressed in connected state, the common controller 8, once identifies the operation, displays a release acknowledgement message on the operation screen for the user. Thereby, the common controller 8 can detect the state which the connection to the electric storage device 3 and the electric storage device for traveling object 4 will be released. Since the electric quantities (charged capacities) of the electric storage device 3 and electric storage device for traveling object 4 are detected by the controllers 3c and 4c, the common controller 8 can detect the energy state (charged capacity) of the electric storage device 3 and electric storage device for traveling object 4 according to the electric quantity information; if the energy state (charged capacity) is judged as inadequate (e.g., the charged capacity is judged as less than 80% of full capacity), the common controller 8 displays a warning message and the time required to reach to full energy state on the operation screen.

Moreover, the common controller 8 is connected with terminal controllers 10b and 10c, and the warning message and the time required to reach to full energy state can also be displayed on the display screens of the terminal controllers 10b and 10c.

The common controller 8 has multiple automatic operation modes, and can select the expected automatic operation mode. The selection can be accomplished on the operation screen of the common controller.

The following five automatic operation modes are available.

### (1) Environmental protection mode

This automatic operation mode incorporates the house and the vehicle, and takes environmental protection as the first priority, i.e., minimizes the emission amount of carbon dioxide.

To minimize the emission amount of carbon dioxide, it is necessary to use the electric power generated by the in-house electric power generation device 2 as far as possible in the house. Therefore, the surplus power generated by the in-house electric power generation device 2 is used in first priority for charging (storing) electric power to the electric storage device 3, charging (storing) electric power to the electric storage device for traveling object 4, and operating the thermal storage device 5a.

The priority of charging of electric storage device 3, charging of electric storage device for traveling object 4, and operation of thermal storage device 5a is preset by the user on the operation screen of the common controller 8.

the environmental protection mode, the common controller 8 controls the controllers 3c and 4c to maintain self-sufficiency of energy in the house in the first priority, and store surplus energy into the electric storage device 3 and the electric storage device for traveling object 4 on condition that the surplus energy is generated.

Specifically, first, after environmental protection mode is selected on the operation screen of the common controller 8, the electric power generated by the in-house electric power generation device 2 is supplied to the household electric loads 5b and 5c, and the deficient part is supplied from the grid power 1.

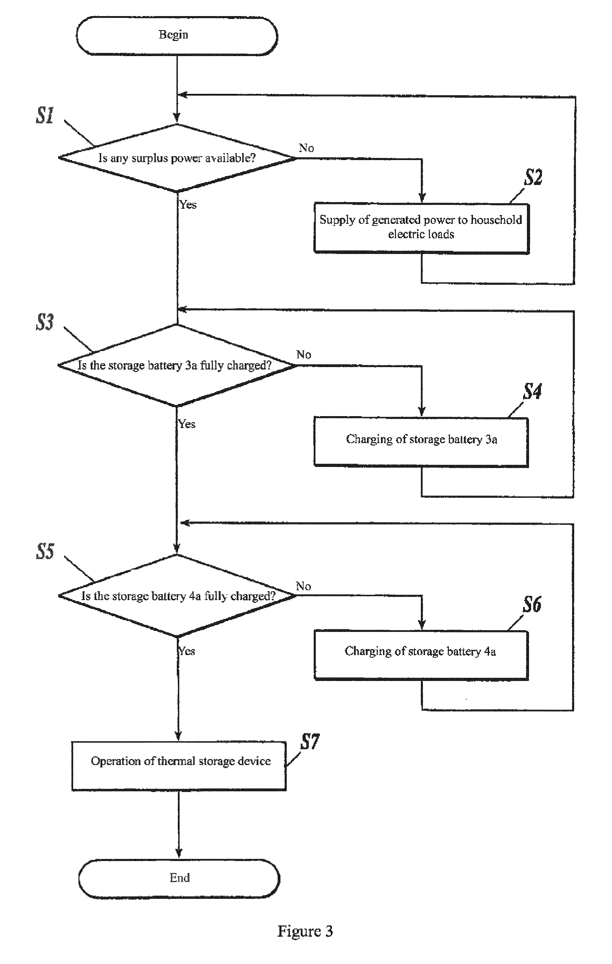

In addition, if the electric power required by the household electric loads 5b and 5c is supplied from the generated power completely, as shown in Figure 3, the common controller 8 judges whether any surplus power is available from the in-house electric power generation device 2 (step S1). It makes the judgment by comparing the electric power required by the household electric loads 5b and 5c with the electric power generated by the in-house electric power generation device 2 and verifying the generated power is higher than the consumed power.

If no surplus power is available, the power generated by the in-house electric power generation device 2 is completely supplied to the household electric loads 5b and 5c (step S2).

If surplus power is available, the common controller 8 judges whether the storage battery 3a of the electric storage device 3 is in fully charged state (step S3). Since the controller 3c can detect the stored capacity (charged capacity) of the storage battery 3a, the judgment can be made according to the information on charged capacity sent from the controller 3c to the common controller 8.

If the storage battery 3a is not in fully charged state, the surplus power is supplied to the storage battery 3a to charge the storage battery 3a (step S4).

If the storage battery 3a is in fully charged state, the common controller 8 judges whether the storage battery 4a of the electric storage device for traveling object 4 is in fully charged state (step S5). Since the controller 4c can detect the stored capacity (charged capacity) of the storage battery 4a, the judgment can be made according to the information on charged capacity sent from the controller 4c to the common controller 8.

If the storage battery 4a is not in fully charged state, the surplus power is supplied to the storage battery 4a to charge the storage battery 4a (step S6).

If the storage battery 4a is in fully charged state, the surplus power is supplied to the thermal storage device 5a to operate the thermal storage device 5a (step S7).

In summer time when the solar radiation is strong, if surplus power from the in-house electric power generation device 2 is available, the common controller 8 controls the transfer controller 9b to transfer the surplus power to other houses in the local area or other areas. In that case, environmental considerations in the areas can be taken.

### (2) Economic mode

This automatic operation mode incorporates the house and the vehicle, and aims at operation in the most economic way for the user by suppressing the energy cost.

If the electricity fee varies in different time periods, electric and thermal storage is carried out in first priority in low electricity price periods. Moreover, besides providing suggestions for electricity fee suppression to the user, the system can recommend the most suitable electric power supply contract to the user on the basis of the actual electric power utilization data in the past, so that the user can ascertain the most suitable machine operation scheme and electric power supply contract for minimizing the energy cost.

In the economic mode, the common controller 8 controls the respective controllers 3c and 4c to store (charge) the grid power 1 into the electric storage device 3 and electric storage device for traveling object 4 in low electricity price periods.

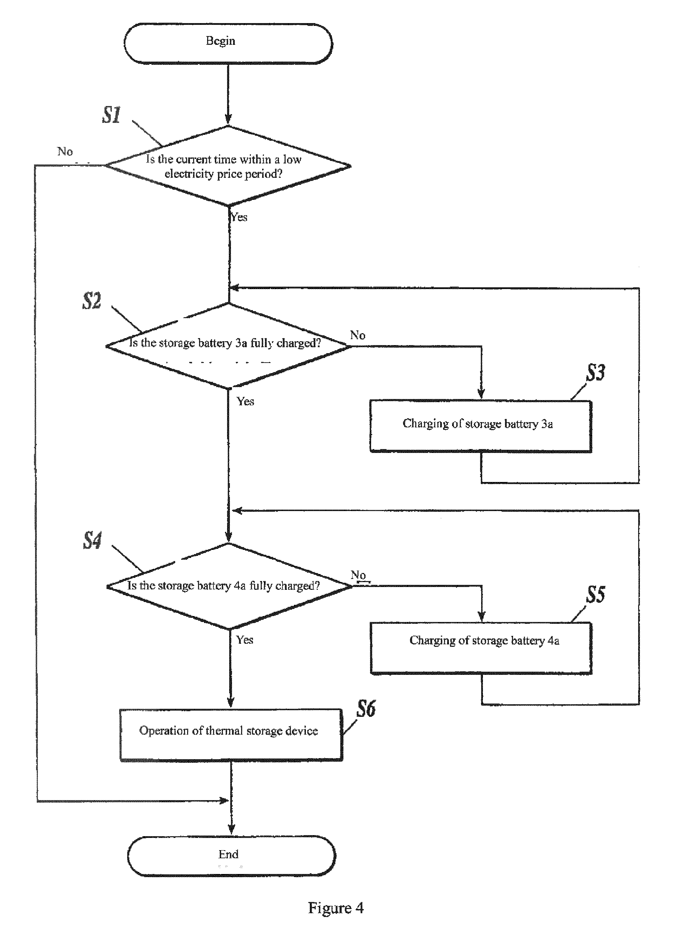

Specifically, as shown in Figure 4, after the economic mode is selected on the selection screen of the common controller 8, the common controller 8 judges whether the current time is within a low electricity price period. Moreover, the common controller 8 has a clock function, and thereby can judge whether the time is within in a low electricity price period (step S1).

If the time is within a low electricity price period, the common controller 8 judges whether the storage battery 3a of the electric storage device 3 is in charged state (step S2). If the storage battery 3a is not in fully charged state, the grid power 1 at the low electricity price is supplied to the storage battery 3 a to charge the storage battery 3a (step S3).

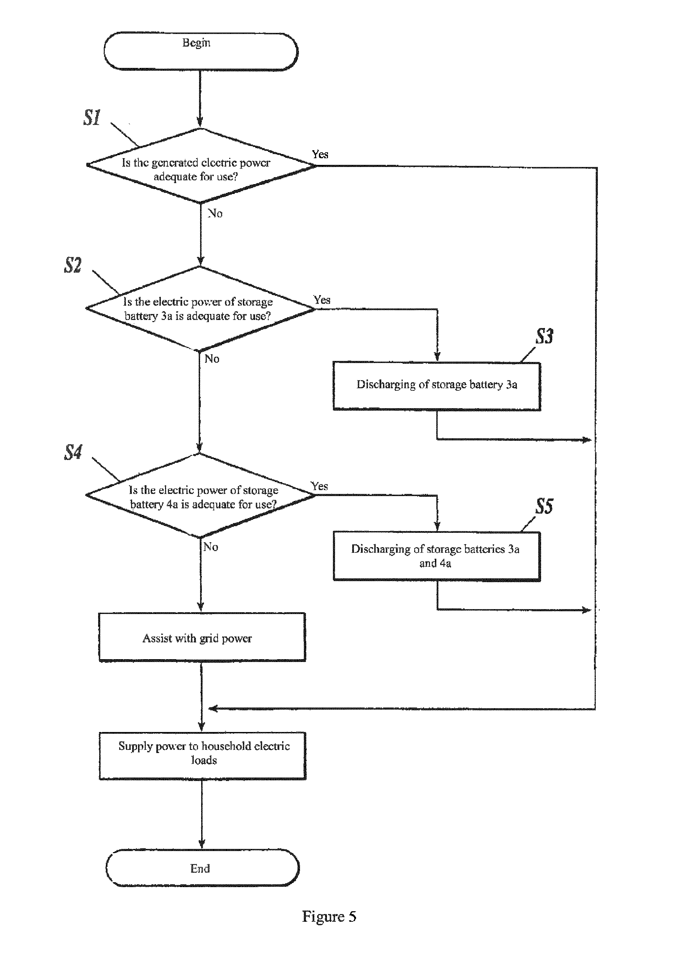

If the storage battery 3a is in fully charged state, the common controller 8 judges whether the storage battery 4a of the electric storage device for traveling object 4 is in fully charged state (step S4). If the storage battery 4a is not in fully charged state, the grid power 1 at the low electricity price is supplied to the storage battery 4a to charge the storage battery 4a (step S5). If the storage battery 4a is in fully charged state, the grid power at the low electricity price is supplied to the thermal storage device 5a to operate the thermal storage device 5a (step S6). In addition, when electric power is supplied to the household electric loads 5, as shown in Figure 5, the common controller 8 judges whether the electric power required by the household electric loads 5 can be supplied completely from the generated power (step S1). If the required electric power can be supplied completely from the generated power, the household electric loads 5 will be powered by the generated power.

If the electric power required by the household electric loads 5 can't be supplied completly from the generated power, the common controller 8 judges whether the deficient part can be supplied from the storage battery 3a of the electric storage device 3 (step S2). If the deficient part can be supplied from the storage battery 3a, the storage battery 3a is controlled to discharge (step S3), and the discharged power is supplied along with the generated power to the household electric loads 5.

If the deficient part of required electric power can't be met completely even with the electric power (stored power) in the storage battery 3a of the electric storage device 3, the common controller 8 judges whether the remaining deficient part can be supplied from the storage battery 4a of the electric storage device for traveling object 4 (step S4). If the remaining deficient part can be supplied from the storage battery 4a, the storage battery 4a is controlled to discharge (step S5), and the discharged power is supplied along with the generated power and the electric power (stored power) discharged from the storage battery 3a to the household electric loads 5.

If the remaining deficient part of required electric power still can't be met even with the electric power (stored power) in the storage battery 4a of the electric storage device for traveling object 4, the common controller 8 supplies the remaining deficient part from the grid power 1, and the grid power 1 is supplied along with the generated power and electric power (stored power) discharged from the storage batteries 3a and 4a to the household electric loads 5.

If the electric power from the electric storage device for traveling object 4 is not meant to use, the steps S4 and S5 can be deleted. The steps S4 and S5 can be deleted on the operation screen of the common controller 8.

### (3) Operation mode against emergency periods

This automatic operation mode aims to store all available energy as far as possible, to make preparation against emergency periods, such as disasters or power outage, etc. This mode is to store electric and thermal energy as far as possible, regardless of the time period and electricity price. The user can preset the types and quantities of energy to be stored with the operation setting for energy storage at ordinary times, according to the weather information and local information, etc., against predictable disasters such as typhoon or heavy rain storm, etc.

In the operation mode against emergency periods, the common controller 8 controls the controllers 3c and 4c to store the grid power 1 or the electric power generated by the in-house electric power generation device 2 into the electric storage device 3 and electric storage device for traveling object 4.

Specifically, first, after the operation mode against emergency period is selected on the operation screen of the common controller 8, the common controller 8 supplies electric power 1, generated power, and stored power to the minimum required household electric loads 5 among the household electric loads 5.

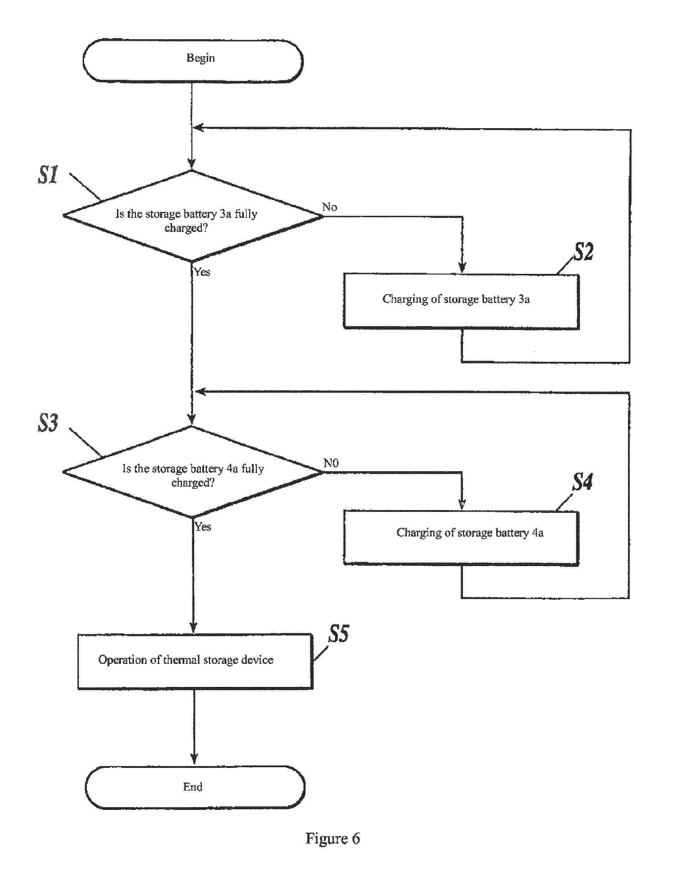

Next, as shown in Figure 6, the common controller 8 judges whether the storage battery 3a of the electric storage device 3 is in fully charged state (step S1). If the storage battery 3a is not in fully charged state, the common controller 8 supplies the grid power or generated power to the storage battery 3a to charge the storage battery 3a (step S2).

If the storage battery 3a is in fully charged state, the common controller 8 judges whether the storage battery 4a of the electric storage device for traveling object 4 is in fully charged state (step S3). If the storage battery 4a is not in fully charged state, the common controller 8 supplies the grid power or generated power to the storage battery 4a to charge the storage battery 4a (step S4).

If the storage battery 4a is in fully charged state, the common controller 8 supplies the grid power or generated power to the thermal storage device 5a to operate the thermal storage device 5a (step S5).

In addition, when the grid power or generated power is supplied to the storage batteries 3a and 4a to charge them, the user can select household electric loads 5 that can be stopped on the operation screen of the common controller 8, and thereby stop power supply to those household electric loads 5.

Moreover, the electric power for charging the storage batteries 3a and 4a and the electric quantity to be charged to the storage batteries 3a and 4a can be selected on the operation screen of the common controller 8.

### (4) Security control and safety mode

In this automatic operation mode, the locking state of front door and windows can be acknowledged when the users go out by combining the common controller 8 with the lock of front door and the locks of windows, the information of visitors and users returning home can be acknowledged with a mobile telephone by combining the common controller 8 with the interphone. In addition, the settings of the respective devices can be change to exercise overall energy management in the house in the most suitable way during long-time travel of the users. As shown in Figure 1, a front door lock 40 and window locks 41 are connected to the common controller 8; in the security control and safety mode, when the windows locks 41 are locked, the locking information will be sent to the common controller 8, and the locking state of the window locks will be displayed on the display screen. For example, whether the windows are locked up are indicates on the display screen, corresponding to the windows.

In addition, in the security control and safety mode, when the front door lock 40 is locked up, the locking information will be sent to the common controller 8. The common controller 8 is connected to Internet, and therefore the locking information of front door lock 40 is sent to the mobile telephones 44 carried by the users over Internet. Thus, the users can acknowledge whether the front door lock 40 is locked up or not by acknowledging with their mobile telephones.

Moreover, an interphone 43 is connected to the common controller 8. In the security control and safety mode, when a visitor arrives, the interphone 43 takes the picture and voice of the visitor, and sends the information to the common controller 8; then, the data is logged in a data logging part 33 (see Figure 2). Moreover, the information is sent to the mobile telephones 44 carried by the users over Internet. Thus, the users can acknowledge the information of the visitor by acknowledging with their mobile telephones 44.

In the security control and safety mode, when a family member returns home and unlocks the front door lock 40, the unlocking information will be sent to the common controller 8, and the common controller 8 will send the information to the mobile telephones 44 carried by other family members over Internet. Thus, other family members can acknowledge whether the front door lock 40 is locked up or not by acknowledging with the mobile telephone 44. In addition, IDs can be assigned to the keys carried by the family members, and the ID information can be sent to the mobile telephones 44, so that the family members can ascertain which family member has returned home.

In addition, the common controller 8 can select the household electric loads that can be stopped, if the security control and safety mode is selected on the selection screen of the common controller 8, so that those household electric loads 5 can be stopped.

The household electric loads 5 that can be stopped, such as air conditioners, electric lamps, etc., can be preset on the screen of the common controller 8.

In addition, for security control purpose, for example, the electric lamps can be set on the screen of the common controller 8 to light up only at a specified nocturnal time.

Thus, in the security control and safety mode, the common controller 8 controls the respective controllers to store grid power 1 into the electric storage device 3 during a nocturnal period when the electricity price is lower, supply the electric power generated by the in-house electric power generation device 2 to the household electric load 5c (such as refrigerator, etc.) which is necessary during daytime in precedence, supply the electric power stored in the electric storage device 3 to the household electric load 5c only when the generated power is inadequate, and supply grid power 1 to the household electric load 5c only when the generated power and stored power are inadequate.

In addition, since the common controller 8 is connected to the mobile telephones 44 over Internet, control information for the respective devices can be sent from the mobile telephones 44 to the common controller 8. Thus, the respective devices 2, 3, 4, and 5 can be operated remotely when the users are not at home.

### (5) Healthy lifestyle mode

In this automatic operation mode, the environmental data such as indoor and outdoor temperature, humidity, and indoor lighting, etc. is collected, and combines with the operation of the air conditioners and electric lamps, thus the in-taking of outdoor air and sunshine associated to open/close of the windows can be controlled automatically. Moreover, suggestion information, such as clothes washing and house cleaning, etc., can be provided, according to the weather forecast and weather information.

The common controller 8 is connected with thermometers and hygrometers mounted indoor and outdoor, and photometers (illuminance meter) mounted in the respective rooms, and the information is sent to the common controller 8.

In addition, the common controller 8 is connected with the window operating devices of electric louvers and windows and curtain operating devices of electric curtains. These window operating devices and curtain operating devices are household electric loads.

In the healthy lifestyle mode, the common controller 8 controls the controller 5e of air conditioner 5b, controllers of window operating devices, and controllers of curtain operating devices, according to the information provided by the thermometers and hygrometers. That is to say, the common controller 8 controls the respective controllers and compares the actual values of thermometers and hydrometers with the optimal temperature and humidity values preset in it, and thereby maintains the indoor temperature and humidity at the optimal values. In addition, the common controller 8 controls the controllers of lighting fixtures and controllers of curtain operating devices, according to the information provided by the photometers. That is to say, the common controller 8 controls the controllers of curtain operating devices and controllers of lighting fixtures, compares the actual values of the photometers with the optimal luminosity values preset in the common controller 8, and thereby maintains the luminosity values in the respective rooms at the optimal luminosity values. During daytime, the luminosity is adjusted on the basis of the sunlight taken into the rooms through the windows (opening level of the curtains) in precedence.

Moreover, the common controller 8 controls the controllers of window operating devices and thereby opens the windows to take exterior air into the rooms at the specified time during daytime. The appropriate time when the windows are opened can be set on the screen of the common controller 8.

In addition, the common controller 8 is connected to weather forecast and weather information websites over Internet, and obtains weather forecast and weather information from these websites. With the obtained information, suggested times for clothes washing and house gleaning, etc. can be provided to the user on the display screen of the common controller 8 and through speakers.

The following effects can be obtained in this embodiment.

The common controller 8 manages the energy consumption and supply by controlling the respective controllers of grid power 1, in-house electric power generation device 2, electric storage device 3, electric storage device for traveling object 4, and household electric loads 5, and thereby the overall energy consumption and supply in the house can be managed centrally, and the respective devices can be controlled with a single controller (common controller) 8 centrally.

In addition, the common controller 8 controls the electricity sale controller 9a for selling the surplus energy generated by the in-house electric power generation device 2 and the transfer controller 9b for transferring electric power to other areas, and thereby the overall energy consumption and supply, including electricity sale and electric power transfer, can be managed centrally.

Moreover, the common controller 8 displays a state of overall energy balance in the house, state of energy supply resulting from the in-house electric power generation device 2, state of energy balance of the electric storage device 3 and electric storage device for traveling object 4, and state of energy consumption resulting from the household electric loads 5; thus, the user can acknowledge the states easily.

Moreover, the common controller 8 can enable the terminal controllers 10a, 10b, 10c, 10d, 10e, and 10f to take precedence in the control over the controllers over the control by the common controller 8; thus, the controllers connected to the devices can be controlled with the terminal controllers 10a, 10b, 10c, 10d, 10e, and 10f as required.

In addition, the common controller can display a state of connection between the grid power 1 and in-house electric power generation device 2 and the electric storage device 3, electric storage device for traveling object 4, and household electric loads 5, and control the energy consumption and supply thereof; thus, the common controller 8 can display a state of connection at the energy supply side and a state of connection at the energy storage or consumption side, and can control the energy consumption and supply.

Moreover, when the common controller 8 judges the energy state of the electric storage device 3 and electric storage device for traveling object 4 is inadequate, it displays a warning message and the time required to reach to full energy state, so that the user can decide whether to supply power to the electric storage device 3 and electric storage device for traveling object 4 till they are charged to full energy state.

When the terminal controller 10c judges the energy state of the electric storage device for traveling object 4 is in inadequate state, it displays a warning message and the time required to reach to full energy state, so that the user can decide whether to store energy to the electric storage device for traveling object 4 till the full energy state is reached by acknowledging on the terminal controller 10c.

In addition, when the environmental protection mode is selected among the automatic operation modes, the common controller 8 controls the controllers 3c and 4c to maintain self-sufficiency of energy in the house in first priority and store surplus energy into the electric storage device 3 and electric storage device for traveling object 4 on condition that the surplus energy is generated; hence, it is possible to achieve optimal energy utilization.

### Industrial Applicability

The system provided in the present invention comprises a common controller, which is connected with a controller for controlling grid power, a controller for controlling an in-house electric power generation device, a controller for controlling an electric storage device, a controller for controlling an electric storage device for traveling object, and controllers for controlling household electric loads; thus, the common controller manages the overall energy consumption and supply in the house centrally by controlling the respective controllers, and the respective machines can be controlled by a single controller (common controller) centrally.

## Claims

1. A household energy management system, which manages energy consumption and supply by incorporating external grid power, an in-house electric power generation device installed in the house, an electric storage device installed in the house, an electric storage device for traveling object installed in a traveling object, and household electric loads installed in the house; wherein, the household energy management system comprises a common controller,
the common controller is connected with a controller for controlling the grid power, a controller for controlling the in-house electric power generation device, a controller for controlling the electric storage device, a controller for controlling the electric storage device for traveling object, and controllers for controlling the household electric loads; the common controller manages the energy consumption and supply by controlling the respective controllers.

2. The household energy management system according to claim 1, **characterized in that**, the common controller controls an electricity sale controller for selling the surplus energy generated by the in-house electric power generation device and/or a transfer controller for transferring electric power.

3. The household energy management system according to claim 1 or 2, **characterized in that**,
the common controller can display: a state of overall energy balance in the house resulting from the grid power, the in-house electric power generation device, the electric storage device, the electric storage device for traveling object, and the household electric loads; a state of energy supply resulting from the in-house electric power generation device; a state of energy balance of the electric storage device and the electric storage device for traveling object, and a state of energy consumption resulting from the household electric loads.

4. The household energy management system according to any one of claims 1-3, **characterized in that**,
the respective controllers are connected, via communication devices that are preset in plant, to the common controller, on the building units that constitute at least a part of the house.

5. The household energy management system according to any one of claims 1-4, **characterized in that**,
terminal controllers are connected to at least one of the plurality of controllers that are connected to the in-house electric power generation device, the electric storage device, the electric storage device for traveling object, and the household electric loads respectively and can control the at least one of the plurality of controllers;
the common controller can enable the control over the controllers by the terminal controllers have precedence over the control over the controllers by the common controller.

6. The household energy management system according to any one of claims 1-5, **characterized in that**,
the common controller can display a state of connection between the grid power and the in-house electric power generation device and the electric storage device, the electric storage device for traveling object and the household electric loads, and control the energy consumption and supply thereof.

7. The household energy management system according to claim 6, **characterized in that**, the common controller displays a warning message and the time required to reach to a full energy state if the common controller judges the energy state of the electric storage device and electric storage device for traveling object is inadequate, when the common controller detects the connections to the electric storage device and the electric storage device for traveling object is to be released.

8. The household energy management system according to claim 7, **characterized in that**,
a terminal controller is connected to the controller that controls the clectric storage device for traveling object;
the terminal controller displays the warning message and time.

9. The household energy management system according to any one of claims 1-8, **characterized in that**,
the common controller has multiple automatic operation modes, and can select an expected automatic operation mode;
in the multiple automatic operation modes, when an environmental protection mode is selected, the common controller controls the respective controllers to maintain self-sufficiency of energy in the house in first priority, and store surplus energy into the electric storage device and electric storage device for traveling object on condition that the surplus energy is generated.
